# EUROPEAN PATENT APPLICATION

(11) **EP 4 825 645 A1**
(43) Date of publication of application: **21.10.2026**
(21) Application number: 24953327.4
(22) Date of filing: 04.09.2024
(51) Int. Cl.: B60L 53/60, B60L 53/30, H02J 7/02

(54) **DIRECT-CURRENT CHARGING SYSTEM FOR ELECTRIC VEHICLE**

(71) Applicant: Delta Electronics Inc., Taoyuan City 320023 (TW)
(72) Inventor: CHENG, Chung-chieh, Taoyuan City Taiwan 320023 (CN); JIANG, Zong-sian, Taoyuan City Taiwan 320023 (CN); KE, Jian-ming, Taoyuan City Taiwan 320023 (CN); ZHENG, Ting-zhong, Taoyuan City Taiwan 320023 (CN)
(74) Representative: Murgitroyd & Company
(86) International application number: PCT/CN2024/116873
(87) International publication number: WO 2026/050926

(57) **Abstract**

A DC-charging system for an electric vehicle includes: a plurality of parallel-connected power conversion group assemblies, at least one charging output port, and a switch matrix. The plurality of power conversion group assemblies are used to provide DC power. The at least one charging output port is switchably and electrically connected to at least one busbar. The switch matrix includes a plurality of first parallel wires, a plurality of second parallel wires, a plurality of first parallel switches, and a plurality of second parallel switches. Each first parallel wire and the parallel switch are switchably and electrically connected between any two busbars without repetition. The second parallel wires and the second parallel switches are switchably and electrically connected between busbars of any two power conversion group assemblies.

## Description

### FIELD

The disclosure relates to charging system, and more particularly, to a direct-current charging system for an electric vehicle.

### BACKGROUND

Conventional switch matrices typically provide m multiplied by n switches, depending on the number of power conversion modules (m) and the number of charging ports (n). This large number of switches and complex architecture increase the cost of the charging system.

Furthermore, as the number of charging plugs and power conversion modules increases, the number of switches required in the system also increases, making the charging system significantly more scalable.

### SUMMARY

In view of the above, the disclosure provides an electric vehicle direct current charging system to effectively solve the issue of high cost caused by the large number of switch elements used in conventional technology.

In order to achieve above-mentioned object of the disclosure, one embodiment of the disclosure provides an electric vehicle direct current (DC) charging system, including: a plurality of parallel-connected power conversion group assemblies for providing DC power, wherein each power conversion group assembly includes a plurality of power conversion module groups, and each power conversion module group includes a plurality of power conversion modules and a busbar for transmitting DC current; at least one charging output port at least switchably and electrically connected to one of the busbars; and a switch matrix including a plurality of first parallel wires, a plurality of second parallel wires, a plurality of first parallel switches, and a plurality of second parallel switches, wherein each first parallel wire and a first parallel switch are switchably and non-repeatedly electrically connected between any two busbars in a same power conversion group assembly, and the second parallel wire and the second parallel switch are switchably and electrically connected between busbars in any two different power conversion group assemblies.

In one embodiment of the electric vehicle DC charging system, any busbar switchably and electrically connected to the at least one charging output port is only cross-connected to a different power conversion group assembly at most once via the second parallel wire and the second parallel switch.

In one embodiment of the electric vehicle DC charging system, only one position for controlling whether the at least one charging output port is switchably and electrically connected to the busbar is provided between the at least one charging output port and switchably and electrically connected busbar, and only one third switch is provided at the position.

In one embodiment of the electric vehicle DC charging system, each power conversion module includes at least one switching mode rectifier (SMR).

In one embodiment of the electric vehicle DC charging system, the second parallel wire and the second parallel switch electrically and non-repeatedly connect between busbars in any two different power conversion group assemblies.

In one embodiment of the electric vehicle DC charging system, a number of power conversion module groups in each power conversion group assembly is the same, a number of second parallel wires is a same as a number of busbars in one of the power conversion group assemblies, and the second parallel wire is provided with pluggable connectors between adjacent power conversion group assemblies to adjust a number of power conversion group assemblies connected in parallel.

In one embodiment of the electric vehicle DC charging system, each second parallel wire of each power conversion group assembly is provided with a male connector at one end and a female connector at another end, and the second parallel switch on each second parallel wire is provided between the male connector and the female connector of the second parallel wire.

In one embodiment of the electric vehicle DC charging system, a number of the power conversion module groups in at least one power conversion group assembly is different from a number of power conversion module groups in another power conversion group assembly.

In one embodiment of the electric vehicle DC charging system, a number of charging output ports is different from a number of the busbars.

One embodiment of the disclosure further provides an electric vehicle direct current (DC) charging system, including: a plurality of parallel-connected power conversion group assemblies for providing DC power, wherein each power conversion group assembly includes a plurality of power conversion module groups, and each power conversion module group including a plurality of power conversion modules and a busbar for transmitting DC current; at least one charging output port switchably and electrically connected to at least one busbar; and a switch matrix including a plurality of parallel wires and a plurality of parallel switches, wherein each busbar is electrically connected to at least one parallel wire, and the at least one parallel wire and corresponding parallel switch are further switchably and non-repeatedly electrically connected to a different busbar.

In one embodiment of the electric vehicle DC charging system, only one position for controlling whether the at least one charging output port is switchably and electrically connected to the busbar is provided between the at least one charging output port and switchably and electrically connected busbar, and only one switch is provided at the position.

In one embodiment of the electric vehicle DC charging system, each of the power conversion modules includes at least one switching mode rectifier (SMR).

In one embodiment of the electric vehicle DC charging system, a number of power conversion module groups in at least one power conversion group assembly is different from a number of power conversion module groups in another power conversion group assembly.

In one embodiment of the electric vehicle DC charging system, a number of charging output ports is a same as a number of busbars.

In one embodiment of the present disclosure, the plurality of parallel wires include a plurality of first parallel wires and a plurality of second parallel wires, and the plurality of parallel switches include a plurality of first parallel switches and a plurality of second parallel switches. Each first parallel wire and a first parallel switch are switchably and non-repetitively electrically connected between any two busbars in a same power conversion group assembly, and the second parallel wire and the second parallel switch are switchably and non-repetitively electrically connected between the busbars of any two different power conversion group assemblies.

In comparison with prior art, the disclosed electric vehicle DC charging system utilizes a relatively small number of switches and has a simple combination architecture, providing a relatively flexible power output combination. Furthermore, the relatively small number of switches employed not only improves the convenience of system expansion but also effectively reduces expenditure costs and avoids the issues in the prior art.

### BRIEF DESCRIPTION OF DRAWINGS

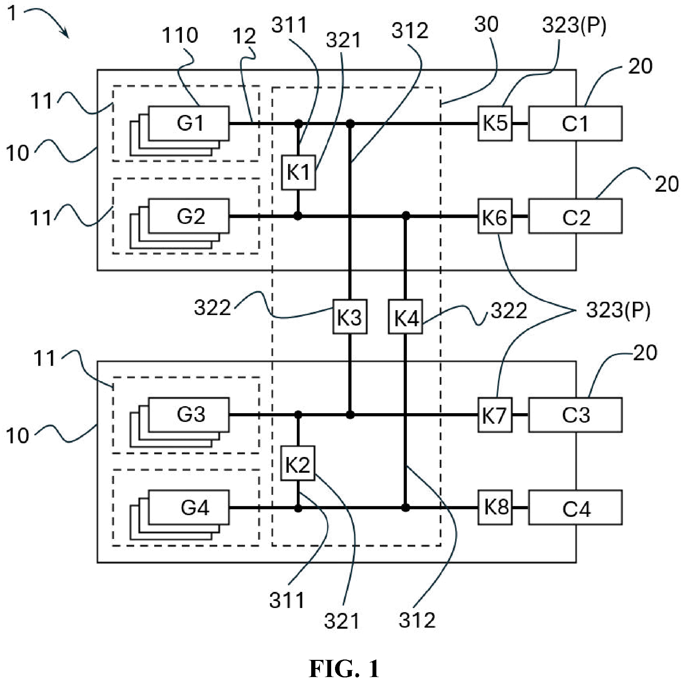

FIG. 1 to FIG. 7 are schematic diagrams illustrating circuit structures of a DC charging system for an electric vehicle according to different embodiments of the present disclosure.

### Reference numerals description:

1, 1a, 1b, 1c, 1d, 1f, 2: electric vehicle DC charging system; 10, 10a, 10b, 10c: power conversion group assembly; 11, G1, G2, G3, G4: power conversion module group; 110: power conversion module; 12: busbar; 20, C1, C2, C3, C4: charging output port; 30: switch matrix; 310: parallel wire; 311: first parallel wire; 312: second parallel wire; 320: parallel switch; 321, K1, K2: first parallel switch; 322, K3, K4: second parallel switch; 323, K5, K6, K7, K8: third switch; 40: connector; 41: male connector; 42: female connector; P: position; and S: switch.

### DETAILED DESCRIPTION

In order to make the above and other objects, features, and advantages of the disclosure more obvious and understandable, preferred embodiments of the disclosure will be described below and explained in detail with reference to the drawings. Further, the directional terms mentioned in this disclosure, such as up, down, top, bottom, front, back, left, right, inside, outside, lateral, peripheral, central, horizontal, transverse, vertical, longitudinal, axial, radial, topmost or bottommost, etc., are only for reference to the direction of the drawings. Therefore, the directional terms described in the detailed description are used to illustrate and understand the disclosure, but not to limit the disclosure. In addition, in the drawings, structurally similar units are represented by the same reference numerals.

Referring to FIG. 1, a schematic diagram of the circuit structure of an electric vehicle direct current (DC) charging system according to one embodiment of the present disclosure is shown. The present disclosure provides an electric vehicle DC charging system 1, including: a plurality of parallel-connected power conversion group assemblies 10, at least one charging output port 20, and a switch matrix 30. The plurality of parallel-connected power conversion group assemblies 10 are configured to provide DC power. Each power conversion group assembly 10 includes a plurality of power conversion module groups 11. Each power conversion module group 11 includes a plurality of power conversion modules 110 and a busbar 12 for transmitting DC current. The at least one charging output port 20 is at least switchably and electrically connected to one of the busbars 12. The switch matrix 30 includes a plurality of first parallel wires 311, a plurality of second parallel wires 312, a plurality of first parallel switches 321, and a plurality of second parallel switches 322. Each first parallel wire 311 and a first parallel switch 321 (e.g., switches labeled K1 or K2 in FIG. 1) are switchably and non-repeatedly electrically connected between any two busbars 12 in the same power conversion group assembly 10. The second parallel wire 312 and the second parallel switch 322 (e.g., switches labeled K3 or K4 in FIG. 1) are switchably and electrically connected between any two busbars 12 in different power conversion group assemblies 10.

In detail, the first parallel switches 321 and the second parallel switches 322 are, for example, relays. The busbar 12 includes at least a power wire and a ground wire. The power conversion module 110 is, for example, a rectifier. The charging output port 20 is, for example, a charging plug or charging socket for an electric vehicle.

In one embodiment of the present disclosure, any bus bar 12 switchably and electrically connected to the at least one charging output port 20 is cross-connected with different power conversion group assembly 10 at most once via the second parallel wire 312 and the second parallel switch 322.

In detail, referring to FIG. 1 , the busbar 12 switchably and electrically connected (via the switch numbered K5) to the at least one charging output port 20 (e.g., the charging output port 20 numbered C1) is cross-connected with different power conversion group assembly 10 (e.g., the power conversion group assembly 10 at the bottom in FIG. 1 ) at most once via the second parallel wire 312 and the second parallel switch 322 (e.g., the switch numbered K3). The busbar 12 switchably and electrically connected (via the switch numbered K6) to the at least one charging output port 20 (e.g., the charging output port 20 numbered C2) is cross-connected with different power conversion group assembly 10 (e.g., the power conversion group assembly 10 at the bottom in FIG. 1) at most once via the second parallel wire 312 and the second parallel switch 322 (e.g., the switch numbered K4).

In one embodiment of the present disclosure, only one position P is provided between the at least one charging output port 20 and the switchably and electrically connected busbar 12 to control whether the at least one charging output port 20 is switchably and electrically connected to the busbar 12. Only one third switch 323 is provided at this position P.

In detail, referring to FIG. 1, only one position P (e.g., the position of the switch numbered K5) is provided between the at least one charging output port 20 (e.g., the charging output port 20 numbered C1) and the busbar 12 that is switchably and electrically connected. This position P controls whether the at least one charging output port 20 is switchably and electrically connected to the busbar 12. Only one third switch 323 (e.g., the switch numbered K5) is provided at this position P.

In one embodiment of the present disclosure, each power conversion module 110 includes at least one switching mode rectifier (SMR), also known as a high-frequency switching rectifier. This SMR converts AC power into DC power. In addition to charging a battery pack, it can also be designed as a power source suitable for electric vehicle charging equipment, with a wide range of applications. It provides quiet, highly reliable DC power and is compact, lightweight, and easy to operate. By utilizing advanced high-frequency switching power supply technology and a high-efficiency design, it becomes a fully functional high-frequency switching rectifier that can be used for powering individual or parallel devices. In a parallel system, a central control and supervisory unit (CSU) performs overall monitoring, providing features such as optimal current load balancing, precise voltage stabilization, battery charging current limiting, automatic battery charging balancing, and battery temperature compensation.

In one embodiment of the present disclosure, the second parallel wire 312 and the second parallel switch 322 are electrically connected to the busbars 12 in any two different power conversion group assemblies 10 without duplication.

In detail, referring to FIG. 1 , the second parallel wire 312 and the second parallel switch 322 (e.g., the switch numbered K3) are electrically connected to the busbars 12 (e.g., the busbars 12 connected to the power conversion module groups 11 numbered G1 and G3 in FIG. 1) in any two different power conversion group assemblies 10 (e.g., the upper power conversion group assembly 10 and the lower power conversion group assembly 10 in FIG. 1 ) without duplication. The second parallel wire 312 and the second parallel switch 322 (e.g., switch numbered K4) are electrically connected to the busbars 12 (e.g., busbars 12 connecting power conversion module groups 11 numbered G2 and G4 in FIG1) between any two different power conversion group assemblies 10 (e.g., the upper power conversion group assembly 10 and the lower power conversion group assembly 10 in FIG1) without duplication.

An electric vehicle DC charging system 1 according to one embodiment of the present disclosure appropriately distributes electrical energy from the power conversion module group 11 to each charging output port 20 according to different charging conditions by controlling switches within a switch matrix 30. In detail, the operation of the switch matrix 30 will be explained below using FIG. 1 as an example. For ease of explanation, FIG. 1 numbers the plurality of power conversion module groups 11 as G1 to G4, the plurality of first parallel switches 321 as K1 to K2, the plurality of second parallel switches 322 as K3 to K4, the charging output ports 20 as C1 to C4, and the third switches 323 as K5 to K8.

When charging at full power with a single output, taking charging output port C1 as an example, the third switch K5 and the first parallel switch K1 are turned on, and any two of the first parallel switch K2 and the second parallel switches K3 to K4 are turned on. This allows the power from all power conversion module groups G1 to G4 to be applied simultaneously to charging output port C1.

When charging at equal power with dual outputs, taking equal power at charging output ports C1 and C2 as an example, the third switches K5 and K6 and the second parallel switches K3 and K4 are turned on. The output power of charging output port C1 is now provided by power conversion module groups G1 and G3. The output power of charging output port C2 is provided by power conversion module groups G2 and G4.

When charging at unequal power with dual outputs, taking the example of charging output port C1 with a power greater than that of C2, the third switches K5 and K6, the first parallel switch K2, and the second parallel switch K3 are turned on. The output power of charging output port C1 is now provided by power conversion module groups G1, G3, and G4. The output power of charging output port C2 is provided by power conversion module group G2.

When charging is performed with dual outputs of unequal power, for example, where the power of charging output port C1 is less than that of C2, the third switches K5 and K6, the first parallel switch K2, and the second parallel switch K4 are turned on. In this case, the output power of charging output port C1 is provided by power conversion module group G1. The output power of charging output port C2 is provided by power conversion module groups G2, G3, and G4.

In detail, the total number of the first parallel switches 321, the second parallel switches 322, and the third switches 323 can be calculated using the following formula: $\left(\frac{N \times \left(N-1\right)}{2}\right) \times \frac{X}{N} + N \times \left(\frac{X}{N}-1\right) + Y ,$ where N is a number of busbars in a power conversion group assembly 10, X is the total number of power conversion module groups 11 in the electric vehicle DC charging system 1, and Y is the total number of charging output ports 20.

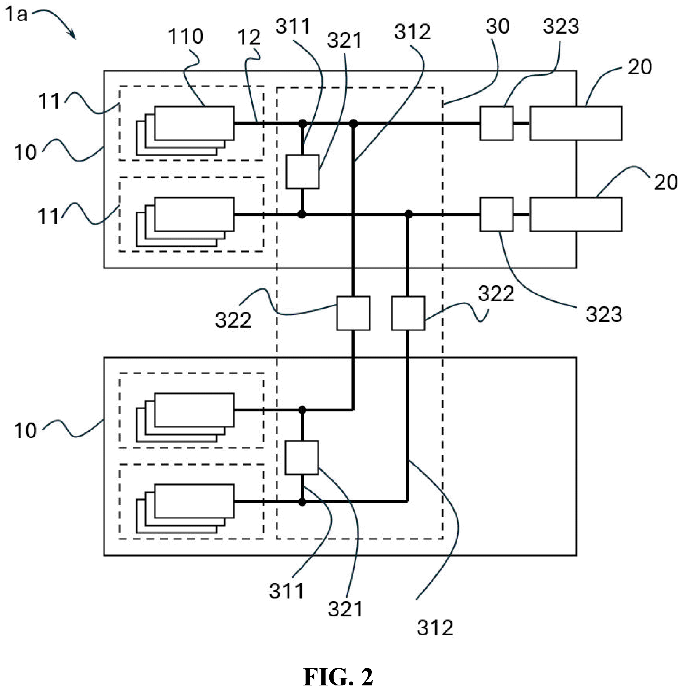

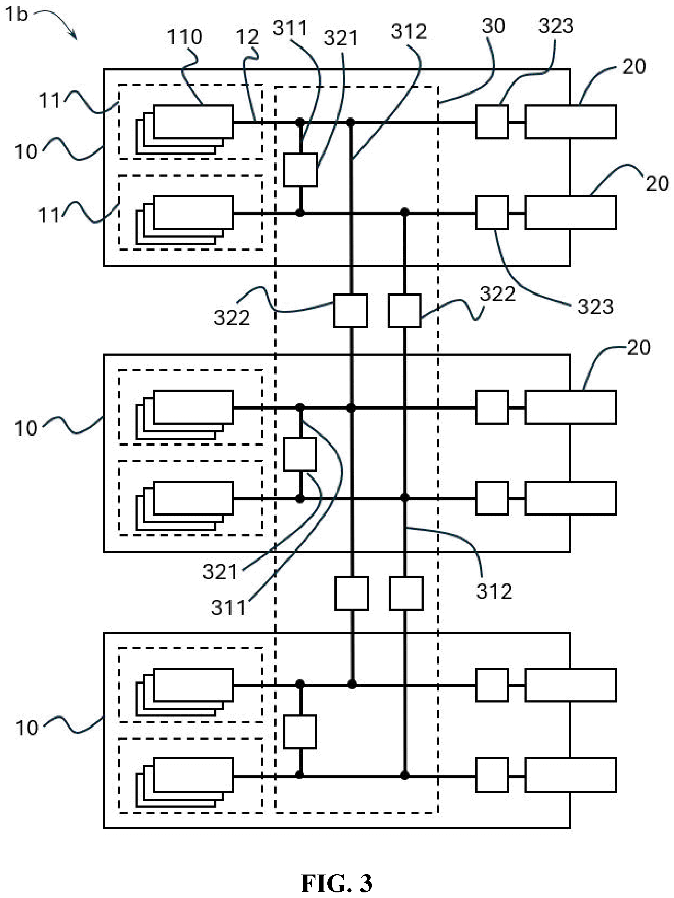

Referring to FIG. 2 and FIG. 3, schematic circuit structures of electric vehicle DC charging systems according to various embodiments of the present disclosure are shown. The primary difference between the electric vehicle DC charging system 1a in FIG. 2 and the electric vehicle DC charging system 1 in FIG. 1 is that the electric vehicle DC charging system 1a in FIG. 2 is provided with two charging output ports 20, while the electric vehicle DC charging system 1 in FIG. 1 is provided with four charging output ports 20. The primary difference between the electric vehicle DC charging system 1b in FIG. 3 and the electric vehicle DC charging system 1 in FIG. 1 is that the electric vehicle DC charging system 1b in FIG. 3 connects three power conversion group assemblies 10 in parallel, while the electric vehicle DC charging system 1 in FIG. 1 connects two power conversion group assemblies 10 in parallel.

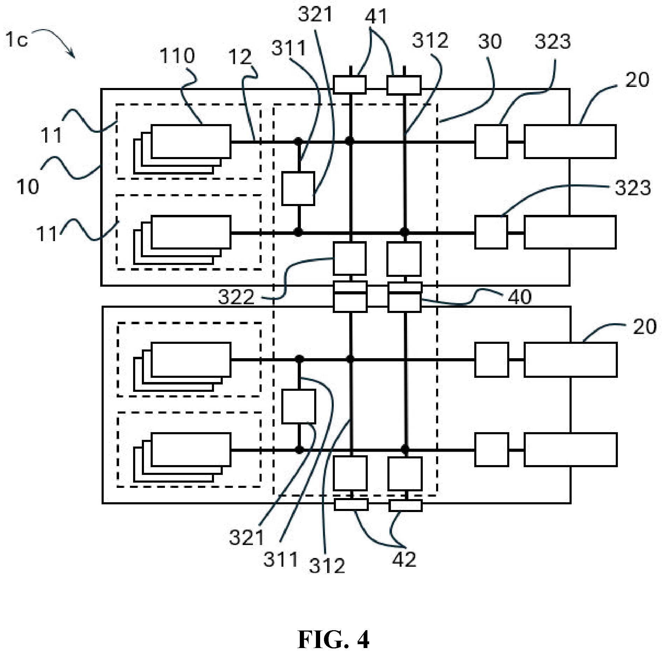

Referring to FIG. 4, a circuit diagram of an electric vehicle DC charging system according to one embodiment of the present disclosure is shown. In one embodiment of the present disclosure, the number of power conversion module groups 11 in each power conversion group assembly 10 is the same, the number of second parallel wires 312 is the same as the number of busbars 12 in one of the power conversion group assemblies 10, and the second paralleling wires 312 are provided with pluggable connectors 40 between adjacent power conversion group assemblies 10 to adjust the number of power conversion group assemblies 10 connected in parallel.

Referring to FIG. 4, in one embodiment of the present disclosure, each second parallel wire 312 of each power conversion group assembly 10 is provided with a male connector 41 at one end and a female connector 42 at the other end. The second parallel switch 322 on each second parallel wire 312 is disposed between the male connector 41 and the female connector 42 of the second parallel wire 312.

In detail, a male connector 41 and a female connector 42 can be combined to form a pluggable connector 40. This disclosure does not limit the specific types of the male connector 41 and the female connector 42. The solid-wire frame of the power conversion group assembly 10 shown in FIG. 4 can be considered a board, frame, or housing. The male connector 41 and the female connector 42 are respectively disposed on the board, frame, or housing of the power conversion group assembly 10 to facilitate quick installation or expansion.

In one embodiment of the present disclosure, the number of power conversion module groups 11 in at least one power conversion group assembly 10 is different from the number of power conversion module groups 11 in other power conversion group assembly 10. In detail, the present disclosure does not limit the number of power conversion module groups 11 in the power conversion group assembly 10. The number of power conversion module groups 11 in the power conversion group assembly 10 may be the same or different.

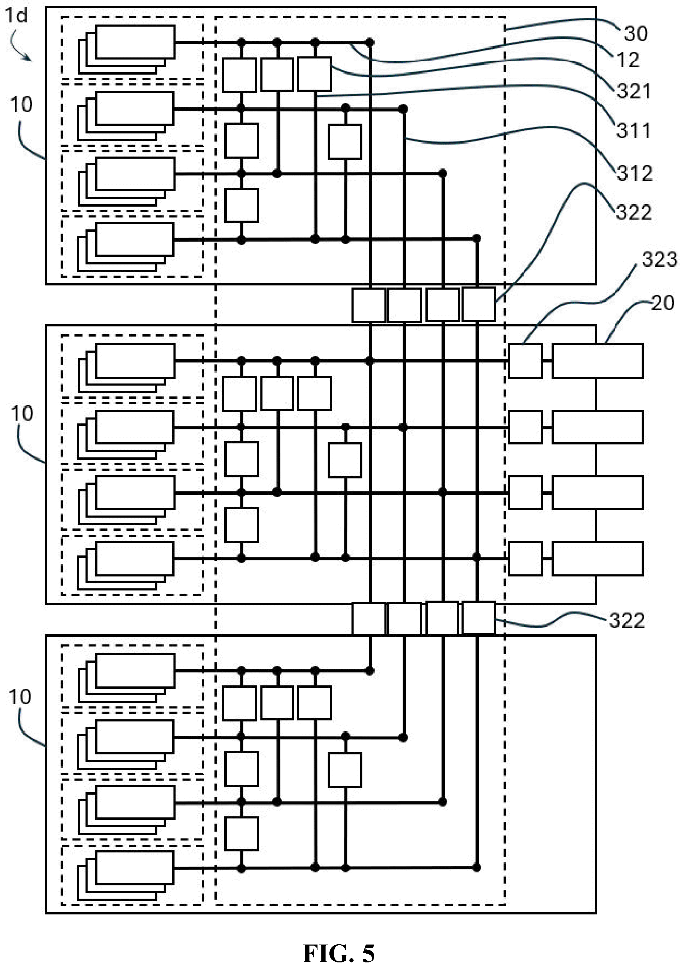

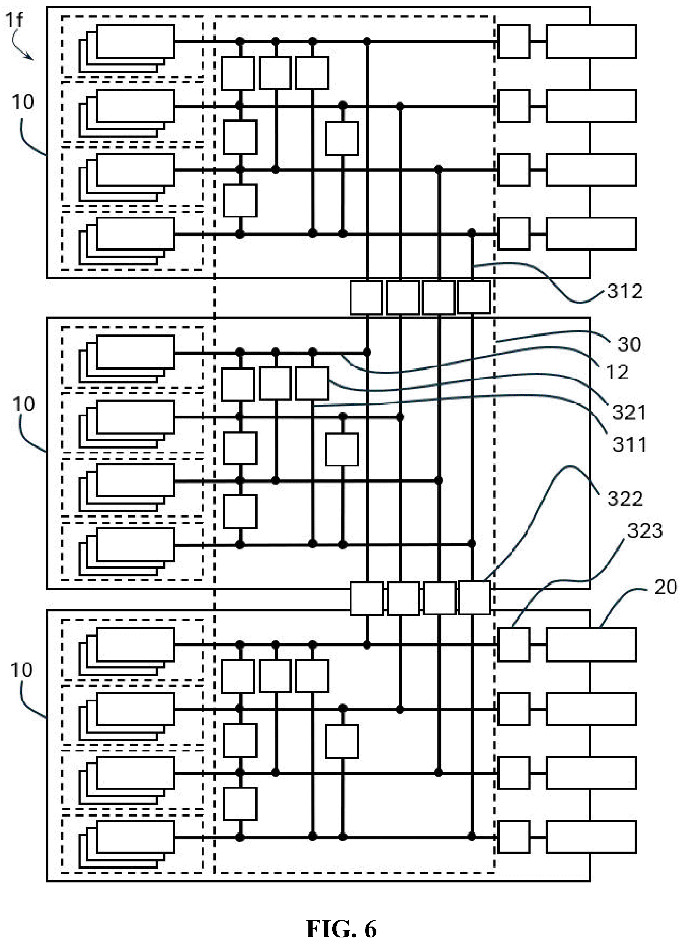

FIG. 5 and FIG. 6 illustrate schematic circuit diagrams of electric vehicle DC charging systems according to various embodiments of the present disclosure. In one embodiment of the present disclosure, the number of charging output ports 20 differs from the number of busbars 12. The main difference between the electric vehicle DC charging system 1d of FIG. 5 and the electric vehicle DC charging system 1 of FIG. 1 is that the electric vehicle DC charging system 1d of FIG. 5 connects three power conversion group assemblies 10 in parallel, and each power conversion group assembly 10 includes four power conversion module groups 11, while the electric vehicle DC charging system 1 of FIG. 1 connects two power conversion group assemblies 10 in parallel, and each power conversion group assembly 10 includes two power conversion module groups 11. The electric vehicle DC charging system 1f of FIG. 6 and the electric vehicle DC charging system 1d of FIG. 5 both connect three power conversion group assemblies 10 in parallel, and each power conversion group assembly 10 includes four power conversion module groups 11. The difference is that the electric vehicle DC charging system 1d of FIG. 5 is provided with four charging output ports 20, while the electric vehicle DC charging system 1f of FIG. 6 is provided with eight charging output ports 20.

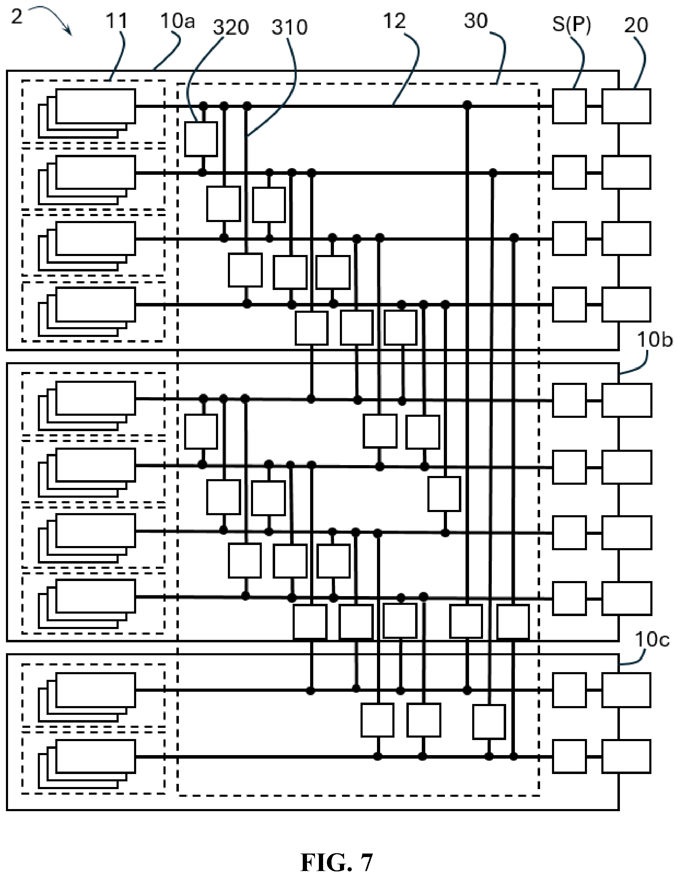

Referring to FIG. 7, a schematic diagram of the circuit structure of an electric vehicle DC charging system according to one embodiment of the present disclosure is shown. The present disclosure provides an electric vehicle DC charging system 2, including a plurality of parallel-connected power conversion group assemblies 10, at least one charging output port 20, and a switch matrix 30. The plurality of parallel-connected power conversion group assemblies 10 are used to provide DC power. Each power conversion group assembly 10 includes a plurality of power conversion module groups 11. Each power conversion module group 11 includes a plurality of power conversion modules 110 and a busbar 12 for transmitting DC current. The at least one charging output port 20 is switchably and electrically connected to at least one busbar 12. The switch matrix 30 includes a plurality of parallel wires 310 and a plurality of parallel switches 320. Each busbar 12 is electrically connected to at least one parallel wire 310, and the parallel wire 310 and the corresponding parallel switch 320 are switchably and non-repeatedly electrically connected to different busbars 12.

In detail, in FIG. 7, each wire connecting between any two busbars 12 is a parallel wire 310. For simplicity, only one parallel wire 310 is numbered in FIG. 7. The switch on the parallel wire 310 is a parallel switch 320. Similarly, for simplicity, only one parallel switch 320 is numbered in FIG. 7. As shown in FIG. 7, each busbar 12 is electrically connected to at least one parallel wire 310, and the parallel wire 310 is non-repeatedly and electrically connected to different busbars 12.

In one embodiment of the present disclosure, only one position P is provided between the at least one charging output port 20 and the busbar 12 that is switchably and electrically connected, for controlling whether the at least one charging output port 20 is switchably and electrically connected to the busbar 12. Only one switch S is provided at this position P.

In detail, as shown in FIG. 7. Between the at least one charging output port 20 (e.g., the top charging output port 20 in FIG. 7) and the busbar 12 (e.g., the top busbar 12 in FIG. 7) that is electrically connected in a switchable manner, only one position P (i.e., the position of the top switch S in FIG. 7) is provided to control whether the at least one charging output port 20 is electrically connected in a switchable manner to the busbar 12. Only one switch S is provided at this position P.

In one embodiment of the present disclosure, each of the power conversion modules 110 includes at least one switching mode rectifier (SMR).

In one embodiment of the present disclosure, the number of power conversion module groups 11 in at least one power conversion group assembly 10 is different from the number of power conversion module groups 11 in the other power conversion group assemblies 10.

In detail, as shown in FIG. 7, the number of power conversion module groups 11 in the power conversion group assembly 10c is two, which is different from the number four of power conversion module groups 11 in the other power conversion group assemblies 10a or 10b.

In one embodiment of the present disclosure, the number of the charging output ports 20 is the same as the number of the busbars 12. In detail, as shown in FIG7, the number of the charging output ports 20 is ten, which is the same as the number of the busbars 12.

Referring to FIG. 7 and FIG. 1, in one embodiment of the present disclosure, the plurality of parallel wires 310 include a plurality of first parallel wires 311 and a plurality of second parallel wires 312. The plurality of parallel switches 320 include a plurality of first parallel switches 321 and a plurality of second parallel switches 322. Each first parallel wire 311 and a first parallel switch 321 are switchably and non-repeatedly electrically connected between any two busbars 12 in the same power conversion group assembly. The second parallel wire 312 and the second parallel switch 322 are switchably and electrically connected between any two busbars 12 in different power conversion group assemblies.

In one embodiment of the present disclosure, the plurality of parallel wires include a plurality of first parallel wires and a plurality of second parallel wires, and the plurality of parallel switches include a plurality of first parallel switches and a plurality of second parallel switches. Each first parallel wire and the first parallel switch are switchably and non-repetitively electrically connected between any two busbars in the same power conversion group assembly, and the second parallel wire and the second parallel switch are switchably and non-repetitively electrically connected between the busbars of any two different power conversion group assemblies.

In comparison with prior art, the disclosed electric vehicle DC charging system utilizes a relatively small number of switches and has a simple combination architecture, providing a relatively flexible power output combination. Furthermore, the relatively small number of switches employed not only improves the convenience of system expansion but also effectively reduces expenditure costs and avoids the issues in the prior art.

The above description is to illustrate the characteristics of the disclosure through preferred embodiments. The purpose is to enable those skilled in the art to understand the content of the disclosure and implement it accordingly, but not to limit the patent scope of the application. Therefore, any other equivalent modifications or modifications that do not depart from the technical ideas disclosed in this application shall still be included in the claim scope described below.

## Claims

1. An electric vehicle direct current (DC) charging system, comprising:
a plurality of parallel-connected power conversion group assemblies for providing DC power, wherein each power conversion group assembly comprises a plurality of power conversion module groups, and each power conversion module group comprises a plurality of power conversion modules and a busbar for transmitting DC current;
at least one charging output port at least switchably and electrically connected to one of the busbars; and
a switch matrix comprising a plurality of first parallel wires, a plurality of second parallel wires, a plurality of first parallel switches, and a plurality of second parallel switches, wherein each first parallel wire and a first parallel switch are switchably and non-repeatedly electrically connected between any two busbars in a same power conversion group assembly, and the second parallel wire and the second parallel switch are switchably and electrically connected between busbars in any two different power conversion group assemblies.

2. The electric vehicle DC charging system of claim 1, wherein any busbar switchably and electrically connected to the at least one charging output port is only cross-connected to a different power conversion group assembly at most once via the second parallel wire and the second parallel switch.

3. The electric vehicle DC charging system of claim 1, wherein only one position for controlling whether the at least one charging output port is switchably and electrically connected to the busbar is provided between the at least one charging output port and switchably and electrically connected busbar, and only one third switch is provided at the position.

4. The electric vehicle DC charging system of claim 1, wherein each power conversion module includes at least one switching mode rectifier (SMR).

5. The electric vehicle DC charging system of claim 1, wherein the second parallel wire and the second parallel switch electrically and non-repeatedly connect between busbars in any two different power conversion group assemblies.

6. The electric vehicle DC charging system of claim 1, wherein a number of power conversion module groups in each power conversion group assembly is the same, a number of second parallel wires is a same as a number of busbars in one of the power conversion group assemblies, and the second parallel wire is provided with pluggable connectors between adjacent power conversion group assemblies to adjust a number of power conversion group assemblies connected in parallel.

7. The electric vehicle DC charging system of claim 6, wherein each second parallel wire of each power conversion group assembly is provided with a male connector at one end and a female connector at another end, and the second parallel switch on each second parallel wire is provided between the male connector and the female connector of the second parallel wire.

8. The electric vehicle DC charging system of claim 1, wherein a number of the power conversion module groups in at least one power conversion group assembly is different from a number of power conversion module groups in another power conversion group assembly.

9. The electric vehicle DC charging system of claim 1, wherein a number of charging output ports is different from a number of the busbars.

10. An electric vehicle direct current (DC) charging system, comprising:
a plurality of parallel-connected power conversion group assemblies for providing DC power, wherein each power conversion group assembly comprises a plurality of power conversion module groups, and each power conversion module group comprising a plurality of power conversion modules and a busbar for transmitting DC current;
at least one charging output port switchably and electrically connected to at least one busbar; and
a switch matrix comprising a plurality of parallel wires and a plurality of parallel switches, wherein each busbar is electrically connected to at least one parallel wire, and the at least one parallel wire and corresponding parallel switch are further switchably and non-repeatedly electrically connected to a different busbar.

11. The electric vehicle DC charging system of claim 10, wherein only one position for controlling whether the at least one charging output port is switchably and electrically connected to the busbar is provided between the at least one charging output port and switchably and electrically connected busbar, and only one switch is provided at the position.

12. The electric vehicle DC charging system of claim 10, wherein each of the power conversion modules comprises at least one switching mode rectifier (SMR).

13. The electric vehicle DC charging system of claim 10, wherein a number of power conversion module groups in at least one power conversion group assembly is different from a number of power conversion module groups in another power conversion group assembly.

14. The electric vehicle DC charging system of claim 10, wherein a number of charging output ports is a same as a number of busbars.
